# EUROPÄISCHE PATENTANMELDUNG

(11) **EP 4 817 408 A1**
(43) Veröffentlichungstag der Anmeldung: **07.10.2026**
(21) Anmeldenummer: 26159608.4
(22) Anmeldetag: 19.02.2026
(51) Int. Cl.: A01G 25/02

(54) **TONKÖRPER ZUR BODENBEWÄSSERUNG UND/ODER BODENBEFEUCHTUNG**

(30) Priorität: 19.02.2025 DE 102025106328
(71) Anmelder: Haller, Benjamin, 85540 Haar (DE); Rommeiss, Philipp, 85159 Augsburg (DE)
(72) Erfinder: Haller, Benjamin, 85540 Haar (DE); Rommeiss, Philipp, 85159 Augsburg (DE)
(74) Vertreter: Eisenführ Speiser

(57) **Zusammenfassung**

Die vorliegende Erfindung betrifft einen Tonkörper (1) zur Bodenbewässerung und/oder Bodenbefeuchtung aus einer aus gebranntem Ton bestehenden Hülle, welche ein Mittelteil (4) mit einer geschlossenen Außenwandung (5) des Tonkörpers (1) bildet und einem inneren Hohlraum (9) zur Aufnahme von Wasser aufweist, wobei das Mittelteil (4) an wenigstens einem Ende ein Abschlussstück (25) mit einem Einlass (2) aufweist, wobei das Abschlussstück (25) aus Ton, Kunststoff oder Metall besteht und das Abschlussstück (25) wasserdicht mit dem Mittelteil (4) des Tonkörpers (1) verbunden ist und das Abschlussstück (25) wenigstens einen Abschnitt (5) mit einem Schlauchanschluss mit Standardmaßen oder Standardausführungen aufweist, um einen Schlauch oder eine Leitung, welche an den Tonkörper (1) angeschlossen werden soll, sicher und abdichtend an den Abschnitt (5) des Anschlussstücks zu befestigen.

## Beschreibung

Die vorliegende Erfindung betrifft einen Tonkörper zur Bodenbewässerung und/oder Bodenbefeuchtung aus einer gebrannten aus Ton bestehenden Hülle.

Nächstliegender Stand der Technik ist das deutsche Gebrauchsmuster DE 20 2023 100 356 U1, weiterer Stand der Technik ist der Aufsatz von Professor Dr. Tassilo-Maria Schimmelpfennig mit dem Titel "Tonbewässerung - Entwicklung eines Verfahrens zum effizienten Umgang mit dem Mangelrohstoff Wasser".

Das wesentliche Problem der aus DE 20 2023 100 356 U1 bekannten Lösung besteht darin, dass der dort beschriebene Tonkörper sehr teuer in der Herstellung ist und weitere Nachteile hat.

Als weiteren Stand der Technik wird auf die EP 2 153 714 A1 hingewiesen.

Der in dem vorgenannten Stand der Technik beschriebene Tonkörper wird mittels eines 3D-Druckverfahrens hergestellt, dabei weist der bekannte Tonkörper ein Mittelteil auf, das an beiden Enden mit jeweils einem Einlass bzw. Auslass abgeschlossen wird und außenseitig weisen Einlass bzw. Auslass widerhakenförmige Strukturen auf, auf die ein entsprechender Anschlussschlauch schiebbar ist, der jedoch aufgrund der widerhakenförmigen Struktur nicht oder nur schwer abziehbar ist.

Es hat sich in der Praxis jedoch herausgestellt, dass diese bekannten Strukturen für den Ein- und Auslass häufig undicht sind, weil unter anderem auch nach dem 3D-Druckverfahren der Tonkörper gebrannt werden muss und dann nicht immer die gleichen Maße wie nach dem unmittelbaren Druck mehr aufweist. Die Schwindung des Materials beim Brand des Tonmaterials ist nicht immer identisch und führt dann auch zu den beschriebenen Problemen. Ein besonderes Problem beim 3D-Druckverfahren besteht auch darin, dass durch den Schichtaufbau sich herausgestellt hat, dass die somit hergestellten Tonkörper anfällig sind für Bruch. Das geht unmittelbar zurück auf den Schichtaufbau mittels des 3D-Druckverfahrens und dem anschließenden Tonbrand und besonders groß ist die Problematik im Anschlussbereich, also in dem Bereich, wo der Tonkörper mit einem Schlauch verbunden werden soll, da in diesem Anschlussbereich Brüche auftreten, die oftmals so groß sind, dass sich dann von dem Anschluss, der im 3D-Druckverfahren hergestellt ist, Teile lösen und somit der Anschluss undicht wird und der Tonkörper beschädigt ist oder gar unbrauchbar wird.

Die damit einhergehende Undichtigkeit im Übergang von Schlauchverbindung einerseits und Einlass/Auslass andererseits geht auch einher mit dem nicht immer sicheren Sitz des Schlauchs auf Einlass bzw. Auslass und unter Umständen kommt es damit auch zum Ablösen des Schlauchs vom Tonkörper, wenn Kräfte auf den Schlauch einwirken.

Aufgabe der Erfindung ist es, die bisher bekannten Tonkörper, wie auch ihre Herstellung, zu verbessern und die bisherigen Probleme der Tonkörper bei Anschluss an Schläuchen zu beseitigen.

Die Aufgabe der vorliegenden Erfindung wird mittels eines Tonkörpers mit den Merkmalen der unabhängigen und abhängigen Patentansprüche gelöst.

Gemäß einer ersten Variante der vorliegenden Erfindung besteht der Tonkörper zur Bodenbewässerung und/oder Bodenbefeuchtung aus einer aus gebranntem Ton bestehenden Hülle, welche ein Mittelteil mit einer geschlossenen Außenwandung des Tonkörpers bildet und einem inneren Hohlraum zur Aufnahme von Wasser aufweist, wobei das Mittelteil an wenigstens einem Ende ein Abschlussstück mit einem Einlass aufweist, wobei das Abschlussstück aus Ton, Kunststoff oder Metall besteht und das Abschlussstück wasserdicht mit dem Mittelteil des Tonkörpers verbunden ist und das Abschlussstück wenigstens einen Abschnitt mit einem Schlauchanschluss mit Standardabmaßen oder Standardausführungen aufweist, um einen Schlauch oder eine Leitung, welche an den Tonkörper angeschlossen werden soll, sicher und abdichtend an den Abschnitt des Abschlussstücks zu befestigen.

Gemäß einer weiteren Variante der vorliegenden Erfindung besteht der Tonkörper zur Bodenbewässerung und/oder Bodenbefeuchtung aus einer aus gebranntem Ton bestehenden Hülle, welche einen Mittelteil mit einer geschlossenen Außenwand und einem inneren Hohlraum zur Aufnahme von Wasser aufweist, wobei das Mittelteil an einem Ende ein Abschlussstück mit einem Einlass aufweist, wobei der Einlass aus wenigstens zwei Abschnitten besteht, nämlich einem ersten Abschnitt, der unmittelbar an dem Mittelteil angebracht ist und einem zweiten Abschnitt, wobei der erste Abschnitt zwischen dem Mittelteil und dem zweiten Abschnitt liegt und der Außendurchmesser des ersten Abschnitts geringer ist, als der Außendurchmesser des zweiten Abschnitts, wobei der erste Abschnitt eine Länge aufweist, die der Länge eines einstellbaren Einlassverschlussmittels angepasst ist, um eine Leitung, welche über beide Abschnitte des Einlasses gelegt wird, sicher und abdichtend mit dem Einlassverschlussmittel am ersten und/oder zweiten Abschnitt zu befestigen.

Das Abschlussstück, welches ein Einlass aufweist, kann sowohl Teil des gesamten Tonkörpers sein, mit ihm also ein integriertes Bauteil bilden, oder auch angesetzt sein, also an die Hülle so angesetzt sein, dass es dichtend und fest mit der Hülle verbunden ist.

Der Mittelteil des Tonkörpers und/oder der Einlass wird bevorzugt mittels eines Schlickergussverfahrens oder eines Extrusionsverfahrens oder durch Verpressen von ein oder mehreren vorgefertigten Teilen hergestellt, wobei dann die einzelnen Teile (Mittelteil, Einlass) miteinander verbunden/verklebt und mit einem entsprechend anderen Verfahren verbunden und dann einem Tonbrand ausgesetzt werden.

Es kann eine Leitung (z. B. Schlauch, Rohr (mit O-Ring)) über den Einlass gelegt/gestülpt und mit dem einstellbaren Einlassverschlussmittel an den Einlass fixiert werden, sodass eine dichte und sichere Verbindung möglich ist, auch wenn die einzelnen Einlassstutzen des Tonkörpers aufgrund von unterschiedlichen Schwindungseigenschaften aber auch der Erarbeitung, Verarbeitung und Endbearbeitung der Tonkörper leicht unterschiedliche Maße aufweisen. Solche Verarbeitungsschritte sind beispielsweise Entgraten, Rändern, Oberflächenbehandlung (Abschmirgeln, Abschleifen von rauen Stellen, insbesondere im Übergangsbereich zwischen Mittelteil und Einlassbereich, Säuberung etc.).

Zwischen dem Übergang vom ersten Abschnitt des Einlasses und dem zweiten Abschnitt ist bevorzugt eine Schulter ausgebildet, gegen die die Leitung an den Einlass sicher durch das Einlassverschlussmittel gedrückt werden kann und somit eine gute Dichtigkeit hergestellt wird.

Vorzugsweise ist der Außendurchmesser des zweiten Abschnitts des Einlasses ein lichtes Maß größer als der Innendurchmesser der Leitung, welcher bevorzugt ein ½ Zoll- oder ¾ Zoll-Schlauch aus flexiblem Material ist.

Dadurch liegt der Schlauch unmittelbar am zweiten Abschnitt an und es wird auch in diesem Abschnittsbereich bereits eine Dichtungsfunktion zwischen Leitung und Einlass bewerkstelligt.

Bevorzugt wird der Einlass und das Mittelteil zusammen hergestellt, es ist aber auch eine getrennte Herstellung möglich, sodass dann die getrennt hergestellten Teile für den Einlass und den Mittelteil zusammengefügt werden, um z. B. auch durch Verklebung, Verpressung, oder dergleichen sicher zusammenzuhalten.

Vorzugsweise weist der Tonkörper ein zweites Ende auf, welches entweder mit einem Abschluss, z. B. einem kegelstumpfförmigen Abschluss, oder mit einem Auslass versehen ist, wobei der Auslass dann bevorzugt die gleiche Struktur und die Abmaße des beschriebenen Einlasses aufweist.

Es ist dann auch möglich, diesen Auslass mittels eines Stopfens (z. B. aus flexiblen Material) oder einer Kappe aus elastischem Material (z. B. Gummi) sicher zu verschließen, sodass dann der Auslass keine Auslassfunktion aufweist, sondern die Funktion eines Verschlusses eines Tonkörpers.

Bevorzugt ist das Mittelteil des Tonkörpers im Wesentlichen zylindrisch ausgebildet und weist außenseitig vorzugsweise Strukturen zur Vergrößerung der Oberfläche auf.

Vorzugsweise ist das Einlassverschlussmittel eine Schelle, z. B. eine Schlauchschelle, eine Rohrschelle oder dergleichen und die Schelle weist eine Breite auf, die der Länge des ersten Abschnitts in etwa, oder genau exakt entspricht.

Mit dieser Auslegung der Schelle ist es möglich, dass diese nicht vom Einlass abrutschen kann, wenn der zweite Abschnitt einen größeren Durchmesser aufweist als der erste Abschnitt und durch Einquetschen des Schlauchs zwischen Schelle und den ersten Abschnitt und im Übergang zum zweiten Abschnitt des Einlasses bildet sich eine sichere Dichtung aus.

Vorzugweise weist der Einlass des Tonkörpers einen dritten Abschnitt auf, der sich an dem zweiten Abschnitt vom Mittelteil weggerichtet anschließt, wobei der dritte Abschnitt einen Außendurchmesser aufweist, welcher geringer ist als der Außendurchmesser des zweiten Abschnitts, vorzugsweise auch des ersten Abschnitts. Der dritte Abschnitt ist vom Durchmesser her insbesondere ausgebildet, dass ein Schlauch mit einem ½ Zoll-Maß gut über den dritten Abschnitt geschoben werden kann, der erste Abschnitt weißt vorzugsweise ein Durchmesser auf, der besonders zur Aufnahme eines ¾ Zoll-Schlauchs geeignet ist.

Somit wird der Einlassstutzen von seiner Länge her vergrößert und verbessert somit die Stabilität (und Führung für die Leitung) des gesamten Einlasses.

Vorzugweise ist der erste Abschnitt des Einlasses im Wesentlichen zylindrisch ausgebildet, wie auch der zweite Abschnitt und im Übergangsbereich zwischen ersten und zweiten Abschnitt weisen diese den gleichen Außenumfang auf -keine scharfen Kanten-, wobei allerdings der Durchmesser des zweiten Abschnitts sich in Längsrichtung vom Mittelteil weg erstreckend ballonartig oder ballig ausgebildet und vergrößert ist. Somit ist in dem Übergangsbereich zwischen dem ersten und zweiten Abschnitt eine Schulter ausgebildet, mit der die Leitung, die den Einlass abschließt, durch das Einlassverschlussmittel entsprechend angelegt werden kann.

Erfindungsgemäß kann mit Tonkörpern ein System mit einer Anzahl von Tonkörpern zur Bodenbewässerung und/oder Bodenbefeuchtung ausgebildet werden, wobei bei der ersten Variante des Systems eine Versorgungsleitung an eine Mehrzahl von Tonkörpern angeschlossen sind, wobei im Bereich des Anschlusses der Tonkörper und die Leitung mit T-Stücken versehen ist, um Wasser einerseits durch die Leitung zum folgenden Tonkörper zu führen und andererseits über das T-Stück zu dem angeschlossenen Tonkörper zu führen, wobei zwischen dem T-Stück und dem angeschlossenen Tonkörper ein Leitungsstück (Schlauchstück) mit einer gewählten Länge ausgebildet ist und das Leitungsstück an den Tonkörper mittels des Verschlussmittels, z. B. Schelle, befestigt ist.

Dieses vorbeschriebene System erlaubt es, eine Vielzahl von Tonkörpern nicht nur waagerecht im Boden, sondern auch aufrecht im Boden zu platzieren, wobei es dann auch möglich ist, dass die Versorgungsleitung sichtbar oberhalb des Bodens liegt, sodass dann, wenn es zu einer Undichtigkeit kommen sollte, dies auch leicht durch Sichtprüfung festgestellt werden kann.

Wenn das Leitungsstück zwischen T-Stück und Einlass hinreichend lang genug ist, ist aber auch eine waagerechte Verlegung des Tonkörpers im Boden möglich, auch ist es grundsätzlich möglich, dass das ganze System nach der Verlegung oberseitig nicht mehr sichtbar angeordnet ist.

Eine sichtbare Anordnung der Versorgungsleitung oberhalb des Bodens hat allerdings den Vorteil, dass dann der Benutzer stets weiß, wo genau die Tonkörper im Boden liegen und es somit nicht zu einer versehentlichen Beschädigung des Tonkörpers bei Einsatz mit Gartenwerkzeugen kommt.

Das System einer alternativen Variante besteht darin, dass die Versorgungsleitung eine Vielzahl von Unterbrechungen aufweist und in diesen Unterbrechungen Tonkörper mit seinem Ein- und Auslass an die Versorgungsleitung angeschlossen wird.

Wenn das Abschlussstück aus Ton besteht, kann es entweder zusammen mit der Hülle als ein Teil hergestellt werden, z. B. in einem Schritt, in dem Ton extrudiert wird, dann verpresst wird und zwar in die vorbestimmte Form, sodass dann der gesamte Tonkörper gebrannt wird. Alternativ dazu kann aber auch das Abschlussstück, selbst wenn es aus Ton besteht, auch an das Mittelteil, welches im Querschnitt vorzugsweise kreisförmig oder quadratisch ausgebildet ist, angesetzt werden, dann wird das Abschlussstück mit dem Mittelteil verklebt, wobei entweder der aufgetragene Kleber eine gute Dichtungsfunktion selbst aufweist oder ein weiteres Dichtmaterial aufgetragen wird, welches für einen wasserdichtenden Abschluss sorgt.

Es ist aber auch möglich, dass das Mittelteil außenseitig eine Komponente eines Bajonettverschlusses aufweist, wobei dann das Abschlussstück die andere Komponente des Bajonettverschlusses aufweist und somit durch ein Aufsetzen bzw. Verdrehen und dann Verschließen durch den Bajonettverschluss sicher und dichtend am Mittelteil anliegt. Auch bei dieser Variante ist es bevorzugt, dass ein Dichtmaterial auf der Innenseite, z. B. Innenumfang, des Abschlussstückes insbesondere in dem Bereich, wo sich Abschlussstück und Mittelteil nahe oder berührend gegeneinander liegen, aufgetragen wird. Das Klebematerial kann dabei entweder flächig, aber auch als eine Raupe mit z. B. 1 mm bis 10 mm Durchmesser (im Querschnitt), z. B. eine Raupe bzw. Materialbahn aus Dichtsilikon, aufgetragen werden.

Derlei Dichtmaterial hat auch den Vorteil, dass es eine gewisse Federwirkung aufweist, das heißt, dass es eine gewisse Kraft zwischen Mittelteil und Abschlussstück aufbringt und dabei auch zusammengedrückt wird und somit die Dichtfunktion verbessert wird.

Vorzugsweise weist das Abschlussstück wenigstens einen ersten Abschnitt, vorzugsweise auch einen zweiten Abschnitt auf, wobei wenigstens einer dieser Abschnitte einen der nachstehenden Standardabmaße aufweist:
A) ¾ Zoll Schlauchanschluss
B) ½ Zoll Schlauchanschluss
C) ¾ Zoll Gewinde (außen/innen)
D) Schnellsteckverbinderanschluss
E) Standard-Klickanschluss (GARDENA^{®}-System) oder ein vergleichbares, standardisiertes Schnellkupplungssystem für Schlauverbindungen (Steckkupplungssystem)

Konkret kann das z. B. bedeuten, dass das Abschlussstück außenseitig ein Abmaß aufweist, dass die Aufnahme eines ¾ Zoll Schlauchanschlusses, eines ½ Zoll Schlauchanschlusses oder auch ein ¾ Zoll Gewinde (außen/innen) ausgebildet ist.

Genauso kann es aber auch sein, dass die Abmaße des Abschnitts, welche das Abschlussstück aufweist, als Schnellsteckverbinderanschluss ausgebildet ist, dass kann im besonderen Beispiel auch ein Standard-Klickanschluss sein, z. B. wie er als GARDENA^{®}-System allgemein bekannt ist oder anderen Systemen ähnlicher Funktionsweise. Das erwähnte GARDENA^{®}-System ist nur ein Beispiel für ein bekanntes Schnellkupplungssystem für Schlauchkupplungen, bei dem ein System als Steckkupplungssystem ausgebildet ist und das System modular aufgebaut ist, um einen Schlauch, der eine Komponente des modularen Verbindungssystems aufnimmt, einfach mit einem Gegenstück zu verbinden (zu verrasten) und wenn beispielsweise das Abschlussstück außenseitig ein Schraubgewinde aufweist, auf welches sich ein standardisiertes Kupplungsstück eines GARDENA^{®}-Systems (oder eines vergleichbaren, standardisierten Systems) aufschrauben lässt (so wie solche standardisierten Elemente sich auch auf einen Wasserhahn mit Schraubgewinde aufschrauben lassen), ist es dann auch möglich, einen Tonkörper mit dem erfindungsgemäßen Abschlussstück auszubilden, der sich dann auch schnell und einfach in einem modularen Garten-Bewässerungssystem (bekannter Art) einbinden lässt. Wenn also ein Abschlussstück außenseitig z. B. ein ½ Zoll-, ¾ Zoll- oder 1 Zoll-Gewinde aufweist, kann daran, wie für einen Wasserhahn üblich, ein Gewindeadapter, also ein Hahnstück, angeschraubt werden. Selbstverständlich ließe sich auch an ein solches Abschlussstück ein Reduzierstück anschrauben, falls dies benötigt wird.

Es ist auch möglich, zum Schutz des Mittelteils des Tonkörpers ein Druckverminderungselement anzuschließen, welches dafür sorgt, dass der Druck im Tonkörper deutlich geringer ist, als in einem üblichen Bewässerungssystem, z. B. bei einem Hauswasseranschluss.

Wenn beispielsweise als Außenabmaß das Abschlussstück ein vorbestimmtes Zollgewinde aufweist, lässt sich daraufhin auch eine entsprechende Komponente eines bekannten Standard-Klickanschlusses (GARDENA^{®}-System) aufdrehen und dann hieran ein Schlauchanschluss in der üblichen weise anschließen.

Der Vorteil eines Abschlussstückes, welches an das Mittelteil angebracht wird, z. B. durch Verkleben, durch Verschrauben, Bajonettverschluss oder dergleichen, ist der, dass dann das Abschlussstück insbesondere der Abschnitt, auf welchen der Schlauch aufgebracht wird, festgelegte Standardabmaße aufweist und somit immer passend ist.

Vorzugsweise wird das Abschlussstück, welches den Einlass des Tonkörpers aufweist, aus einem Kunststoff, z. B. einem Polyethylen (PE), Thermoplast (TP) oder Polypropylen (PP) oder einem Recyclat oder dergleichen hergestellt.

Weiter vorzugsweise weist das Abschlussstück des Tonkörpers, welches den Einlass aufnimmt, einen überstehenden Rand auf, der sich bei Verbindung mit dem Mittelteil oberhalb des Umfangs des Mittelteils legt und der somit das Mittelteil umhüllend aufnimmt, sodass der Rand des Abschlussstücks die Hülle des Mittelteils umfasst und durch Auftrag von Dichtmaterial und/oder Klebematerial auf die Innenseite des Abschlussstückes und/oder der entsprechenden Stellen der Außenseite des Mittelteils die beiden Teile Abschlussstück und Mittelteil miteinander dichtend verklebt werden können.

Es ist auch möglich, einen Kleber einzusetzen, welcher gleichzeitig auch eine ausreichende Dichtungsfunktion aufweist, also bevorzugt nicht wasserlöslich ist.

Eine weitere Variante der Verbindung zwischen dem Tonkörper und dem Abschlussstück aus einem Thermoplast, PE, PP etc. ist neben dem Kleben auch eine Verbindung durch Rotationsschweißen oder Ultraschallschweißen, dabei wird die Oberfläche des Thermoplasts fließfähig und kann auch beispielsweise in die Kapillare des gebrannten Tons des Mittelteils des Tonkörpers eindringen und nach Erkalten und Aushärten des Thermoplasts wird somit eine dauerhaft dichte Verbindung geschaffen. Bei der vorgenannten Verbindungsart wird mithin darauf geachtet, dass nur der Teil des Abschlussstücks erwärmt bzw. fließfähig gemacht wird, der direkt an dem Mittelteil des Tonkörpers berührend anliegt und somit dann die dauerhafte Verbindung zum Mittelteil herstellt.

Vorzugsweise weist das Abschlussstück wenigstens zwei Abschnitte auf, nämlich einen ersten Abschnitt, der näher an dem Mittelteil liegt, als der zweite Abschnitt, wobei der erste Abschnitt zwischen dem Mittelteil und dem zweiten Abschnitt liegt, und der Außendurchmesser des ersten Abschnitts größer ist, als der Außendurchmesser des zweiten Abschnitts, und beide Abschnitte weisen vorbeschriebene Standardabmaße bzw. Standardausführung (Standard-Klickanschluss) auf, um Rohre, Schläuche, Leitungen verschiedener Durchmesser, die an den Tonkörper angeschlossen werden sollen, sicher und abdichtend mit dem Abschlussstück am ersten und/oder zweiten Abschnitt zu befestigen.

Diese Variante hat den Vorteil, dass der Endkunde ein bereits vorhandenes Schlauchsystem einfacher an den Tonkörper anschließen kann.

Wenn beispielsweise der Endkunde einen ¾ Zoll Schlauch bereits vorliegen hat, kann dieser genauso gut und dichtend angeschlossen werden, wenn der erste Abschnitt für den Anschluss eines ¾ Zoll Schlauchanschlusses ausgelegt ist und gleichzeitig kann der Kunde aber auch alternativ ½ Zoll Schlauchanschluss an das Abschlussstück anschließen, wenn der zweite Abschnitt außenseitig die Maße für einen ½ Zoll Schlauchanschluss aufweist.

Es ist auch denkbar, dass der erste Abschnitt für den Anschluss eines ¾ Zoll Schlauchanschlusses ausgelegt ist und der zweite Abschnitt dann für die Aufnahme einer ersten Komponente eines Standard-Klickanschlusses (z. B. vom GARDENA^{®}-System) ausgelegt ist, sodass dann auch alternativ zum ¾ Zollanschluss auch ein GARDENA^{®}-Stecksystem zum Einsatz kommen kann.

Vorzugsweise weist das Abschlussstück einen zylindrischen Abschnitt auf, dessen Innendurchmesser nur ein lichtes Maß größer ist, als der Außendurchmesser des (zylindrischen) Mittelteils. Somit ist dann neben der abdichtenden, verklebenden Verbindung auch eine Grundstabilisierung des Mittelteils und damit der Hülle aus Ton gewährleistet, was den Tonkörper insgesamt verstärkt, weil im normalen Gebrauch immer eher zu erwarten ist, dass an die Ecken des Tonkörpers ein Anschlag erfolgt.

Vorzugsweise ist der Tonkörper mit einem Mittelteil versehen, welches an seinem freien Ende so abgeschlossen wird, dass es eine nach innen liegende Auskragung aufweist, die außenseitig an die Innenseite des Abschlussstücks angepasst ist, sodass das Abschlussstück und das Mittelteil sich über einen größeren Flächenabschnitt miteinander berühren und somit eine größere Auftragsfläche für Kleber bzw. Dichtmaterial bereitgestellt wird. Eine solche Ausführung hat nochmals zur Folge, dass das gesamte Mitteilteil aus Ton noch stabiler wird insbesondere gegen Schläge von außen noch besser geschützt wird.

Die Erfindung wird nachfolgend anhand von Ausführungsbeispielen näher erläutert.
- Figur 1: zeigt im Querschnitt eine erste Variante des erfindungsgemäßen Tonkörpers,
- Figur 2: zeigt im offenen Querschnitt eine zweite Variante des erfindungsgemäßen Tonkörpers,
- Figur 3: zeigt eine Vergrößerung des Einlasses des Tonkörpers zu seinem Mittelteil,
- Figur 4: zeigt eine Außenansicht der ersten Variante,
- Figur 5: zeigt eine Außenansicht der zweiten Variante,
- Figur 6: zeigt Anbindung des Tonkörpers der ersten Variante in einem Bewässerungssystem,
- Figur 7: zeigt die Einbindung der Tonkörper der zweiten Variante in einem Bewässerungssystem,
- Figur 8: zeigt die schematische Darstellung der Verlegung eines Tonkörpers der ersten Variante, welcher am Schlauchsystem angeschlossen ist,
- Figur 9: zeigt eine unterirdische Verlegung eines Tonkörpers der zweiten Variante mit einem angeschlossenen Schlauch,
- Figur 10: zeigt einen Tonkörper der ersten Variante bei oberirdischer Verlegung,
- Figur 11: zeigt einen Tonkörper der ersten oder zweiten Variante, welcher von Erdmaterial bedeckt ist,
- Figur 12: zeigt einen Tonkörper der ersten oder zweiten Variante, welcher vertikal in ein Loch im Boden gesteckt ist,
- Figur 13: zeigt ein noch nicht in den Erdboden eingebrachtes System mit Tonkörpern der ersten Variante, die an einem Schlauchsystem angeschlossen sind,
- Figur 14: zeigt die Verlegung eines Bewässerungssystems mit den Tonkörpern der zweiten Variante im Erdboden (aber noch im unbedeckten Zustand),
- Figur 15: zeigt eine Seitenansicht eines separaten Abschlussstückes,
- Figur 16: zeigt eine Draufsicht auf ein separates Abschlussstück nach Figur 15,
- Figur 17: zeigt eine perspektivische Ansicht auf die Innenseite des Abschlussstücks nach den Figuren 15 und 16,
- Figur 18: zeigt eine perspektivische Ansicht auf die Innenseite des Abschlussstücks mit dort eingetragenen Dichtbahnen und Klebebahnen,
- Figur 19: zeigt eine Außenansicht eines Tonkörpers mit einem Abschlussstück nach den Figuren 15 bis 18,
- Figur 20: zeigt verschiedene Darstellungen für die Herstellung des Tonkörpers, und
- Figur 21: zeigt eine Querschnittsdarstellung der Lagen zwischen Endabschnitt des Mittelteils und Abschlussstück.

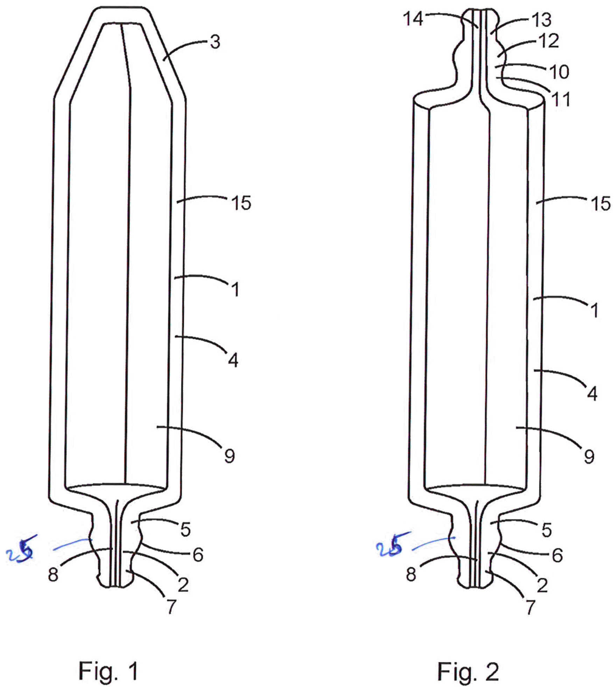

Figur 1 zeigt im Längsquerschnitt einen Tonkörper 1 mit einem Abschlussstück 25 mit einem Einlass 2 an einer Seite und einem Verschluss 3 an der anderen Seite. Im mittleren Bereich des Tonkörpers 1 bildet dieses ein Mittelteil 4. In diesem Mittelteil 4 befindet sich wie erwähnt an der einen Seite der Einlass 2 (als Teil des Abschlussstückes 25) mit einem ersten Abschnitt 5, einem zweiten Abschnitt 6 und einem dritten Abschnitt 7. Der erste Abschnitt 5 liegt somit zwischen dem Mittelteil 4 und dem zweiten Abschnitt 6, an den sich vom Mittelteil weggerichtet ein dritter Abschnitt 7 anschließt.

Immer wenn der Tonkörper mit seinem Mittelteil an der einen Seite mit einem Schlauch zu verbinden ist, weißt dieser Tonkörper an dieser Seite dann das Abschlussstück auf, an dem der Schlauch anschließbar ist.

Das Mittelteil 4 ist im Wesentlichen hohlzylindrisch ausgebildet mit einer strukturierten Oberfläche und eine Wandstärke von bevorzugt 5 mm bis 12 mm Dicke -je nach Einsatzartvorzugsweise zwischen 7 mm und 9 mm. Je dünner die Wandstärke ist, umso eher ist der vorhandenen Wasserdruck bestimmende Größe, wie viel Wasser im Inneren des Tonkörpers durch die Wandung nach außen tritt. Mit einer Wandstärke von 8 mm oder mehr hingegen ist der Wasserdruck weniger bestimmend, sondern dann die Osmosekraft bzw. Saugspannung, die sich einstellt aufgrund der unterschiedlichen Feuchtigkeitsunterschiede zwischen innen und außen vom Tonkörper. Je trockener dabei die Außenumgebung des Tonkörpers ist umso höher ist diese Kraft, die dafür sorgt, dass Wasser durch die Wandung von innen nach außen tritt.

Bei der erfindungsgemäßen Lösung sind daher Tonkörper mit einer Wandungsdicke >7 mm, vorzugsweise 8 mm bis 12 mm, besonders bevorzugt.

Der Einlass 2 weist innenseitig einen Kanal 8 auf, der in einen Innenraum 9 des Mittelteils 4 mündet. Der Durchmesser dieses Kanals liegt im Bereich von 4 mm bis 8 mm, sodass Wasser von außen durch den Kanal in den Innenraum 9 des Mittelteils gelangen kann oder vom Innenraum 9 durch den Kanal 8 wiederum nach außen fließen kann.

Der Verschluss 3 des Tonkörpers ist bevorzugt spitz oder stumpf -kegelstumpf- zulaufend, was den Vorteil hat, dass dann der Tonkörper vertikal in den Boden gedreht oder gedrückt werden kann, was jedenfalls bei gelockerten Gartenböden ohne Weiteres möglich ist. Alternativ wird mit einem Werkzeug eine vertikale Aussparung in den Boden eingebracht, um den Tonkörper dort einzuführen.

Der gesamte Tonkörper wird aus einem Tonmaterial mit einer besonderen Mischung für ein optimales Feuchtigkeitsmanagement gebildet. Durch die spezielle Eigenschaft des Tonmaterials kann das Wasser bedarfsgerecht nach außen abgegeben werden.

Bevorzugt ist der Tonkörper im Schlickergussverfahren hergestellt; dabei ist neben einer einteiligen Herstellung des gesamten Tonkörpers auch eine mehrteilige Herstellung möglich, z. B. eine Herstellung zunächst nur des Mittelteils, dann des Einlasses sowie des Verschlusses, wobei diese Teile dann nach der Herstellung miteinander verbunden werden, z. B. verklebt werden, um dann dem Tonbrand im Bereich von 960 °C bis 1150 °C zugeführt zu werden.

Es ist auch möglich, den gesamten Tonkörper durch das Verpressen von Einzelteilen herzustellen und die verpressten Teile werden dann wiederum wie erwähnt miteinander verbunden, z. B. verklebt und dann gebrannt.

Der Außendurchmesser des Tonkörpers liegt im Bereich zwischen 40 mm bis 80 mm, vorzugsweise ca. 50 mm, und die Länge des Mittelteils des Tonkörpers liegt zwischen 180 mm und 220 mm, vorzugsweise 200 mm.

Die Länge des Einlasses beträgt insgesamt ca. 20 mm bis 40 mm, der Durchmesser des ersten Abschnitts liegt bei ca. 12 mm bis 15 mm, der äußere größte Durchmesser des zweiten Abschnitts liegt bei ca. 20 mm und der größte äußere Durchmesser des dritten Abschnitts liegt bei ca. 13 mm.

Neben den genannten Maßen ist es selbstverständlich auch möglich, den Tonkörper mit anderen Maßen herzustellen, z. B. kleinere Tonkörper für die Bewässerung von Zimmer- und Balkonpflanzen; gleichermaßen sind auch größere Abmaße möglich, um somit das Aufnahmevolumen für das Wasser und die Anschlussgrößen zu vergrößern, insbesondere dann, wenn der Tonkörper zur Bewässerung in Feldern oder auch an Bäumen vorgesehen ist.

Figur 2 zeigt eine alternative Ausbildung des Tonkörpers, wobei dieser Tonkörper sich von der Variante nach Figur 1 dadurch unterscheidet, dass statt des geschlossenen Abschlusses 3 ein Auslass 10 an dessen Mittelteil 4 des Tonkörpers angesetzt/ausgebildet ist und dieser Auslass 10 weist strukturell die gleichen Abmaße wie der Einlass 2 auf, mit einem ersten Abschnitt 11, einem zweiten Abschnitt 12 und einem dritten Abschnitt 13, die innenseitig wiederum einen offenen Kanal 14 aufnehmen. Wie erwähnt, sind die Abmaße des Auslasses 10 im Wesentlichen gleich wie die Abmaße des Einlasses 2, sie können sich aber auch hiervon unterscheiden, wenn dies für einen bestimmten Zweck erwünscht ist.

In der Variante nach Figur 2 kann Wasser, welches durch den Einlass 2 in den Innenraum 9 des Tonkörpers 1 gelangt, nicht nur über die Außenwandung 15 des Tonkörpers nach außen abgegeben werden, sondern Wasser kann auch von dem Innenraum 9 über den Auslass 10 weiter nach außen abgegeben und aus dem Tonkörper herausfließen.

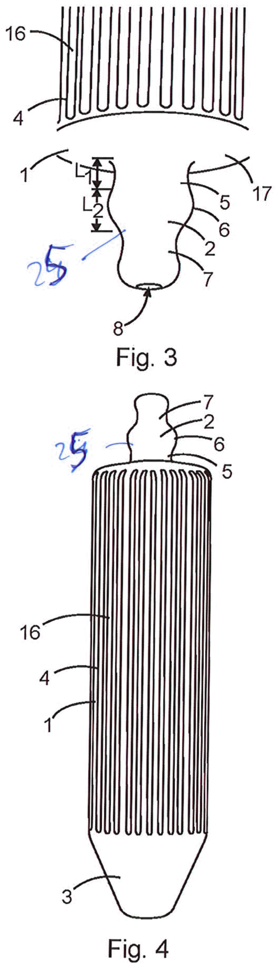

Figur 3 zeigt eine perspektivische Aufsicht auf einen Teil des Tonkörpers 1 mit einem Teil des Mittelteils 4 mit seiner außenseitig ausgebildeten strukturierten Oberfläche 16 sowie den Einlass 2 mit dem ersten Abschnitt 5, dem zweiten Abschnitt 6 und dem dritten Abschnitt 13 sowie dem offenen Zugang des Einlasskanals 8. Der Übergang zwischen dem ersten Abschnitt 5 und dem Mittelteil 4 wird durch einen Deckel 17 gebildet; dieser Deckel 17 wird entweder zusammen mit dem Einlass 2 hergestellt oder zusammen mit dem Mittelteil 4 oder separat.

Die strukturierte Oberfläche 16 hat den Vorteil, dass sie gegenüber dem idealen Oberflächenmaß vergrößert ist und somit besser Feuchtigkeit nach außen abgeben kann.

In Figur 3 ist besonders gut zu erkennen, dass der erste Abschnitt 5 eine vorbestimmte Länge L₁ aufweist und einen vorbestimmten Außendurchmesser, der geringer ist als der Außendurchmesser des zweiten Abschnitts 6 mit seiner bestimmten Länge L₂.

Die Länge L₁ des ersten Abschnitts ist im Wesentlichen an die Breite eines Verschlussmittels, z. B. einer Rohrschelle angepasst, dies wird noch später erläutert. Der zweite Abschnitt 6 wird nach außen hin ballig oder ballonartig vergrößert und sein Außendurchmesser ist idealerweise etwa so groß oder ein lichtes Maß kleiner oder größer als der Innendurchmesser einer Leitung, z. B. eines Standard-Schlauchs, welche über den Einlass positioniert/gelegt wird, wobei das freie Ende des Schlauchs bis an den Deckel 17 berührend herangeführt werden kann.

Figur 4 zeigt eine Außenansicht des Tonkörpers gemäß Figur 1 mit dem Mittelteil 4, mit dem Abschluss 3 und dem Einlass 2. In dieser Figur ist auch gut die strukturierte Oberfläche 16 zu erkennen, die im Wesentlichen aus wechselnden erhöhten Stegen und Vertiefungen gebildet ist, die sich parallel zueinander in Längsrichtung erstrecken.

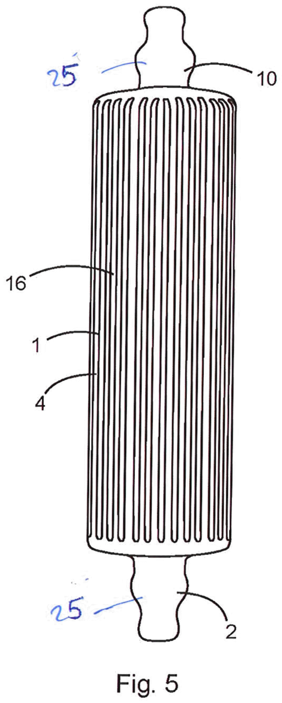

Figur 5 zeigt die Aufsicht auf den Tonkörper gemäß der Variante in Figur 2, also mit einem Mittelteil 4 und dem Einlass 2 an der einen Seite des Mittelteils und dem Auslass 10 an der anderen Seite des Mittelteils.

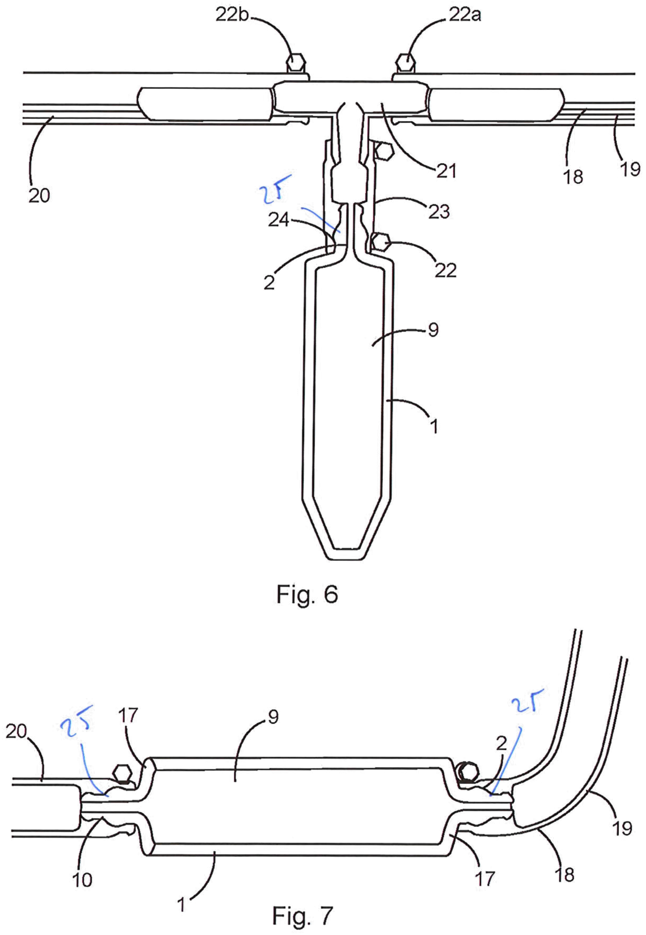

Figur 6 zeigt einen Schlauch 18 (als bevorzugte Leitung), der an den Tonkörper 1 angeschlossen ist. Hierzu weist der Schlauch 18 eine Unterbrechung in zwei Abschnitte 19, 20 auf. Diese beiden Abschnitte nehmen an ihren freien Enden dann ein T-Stück 21 auf und die freien Enden der Schlauchabschnitte 19 und 20 sind mittels Rohrschellen 22a und 22b an dem T-Stück befestigt, sodass die Schlauchenden 19 und 20 zum T-Stück fixiert und gegenüber diesem abgedichtet sind. Das T-Stück 21 ist innenseitig hohl, Wasser kann also durch das T-Stück von einem Schlauchstück 19 zum Schlauchstück 20 fließen.

Am dritten Ende des T-Stücks 21 ist ein weiteres Schlauchstück 23 angeschlossen, welches einerseits das freie Ende des T-Stücks 21 umschließt und dort ebenfalls mit einer Schelle als Verschluss befestigt ist, und das andere Ende des Schlauchstücks 23 ist über den Einlass 2 des Tonkörpers 1 geschoben und dort ebenfalls mit einer Rohrschelle oder einem entsprechenden Verschlussmittel an dem Einlass befestigt, vorzugsweise ist die Breite der Rohrschelle in etwa so breit wie die Länge des ersten Abschnitts. Die Schelle drückt den Schlauch auf den ersten Abschnitt und/oder zweiten Abschnitt vorzugsweise auch Übergangsbereich zwischen dem ersten und zweiten Abschnitt, wo dieser aufgrund der ballonartigen Ausweitung des zweiten Abschnitts eine Schulter 24 bildet. Das hat für die Abdichtung an der Schulter den Vorteil, dass die Kräfte (von außen) die auf den Einlass auch in seine Längsrichtung wirken, den Schlauch somit an der entsprechenden Stelle einquetschen und eine sichere Dichtung ermöglicht, sodass kein Wasser durch diesen Teil des Abschlusses nach außen dringen kann.

Figur 7 zeigt den Anschluss eines Schlauchs 18 mit den Schlauchstücken 19 und 20 an den Tonkörper gemäß der Variante nach Figur 2. In der Figur ist dabei gut zu erkennen. dass die Schelle beabstandet oder berührend am Deckel 17 des Tonkörpers liegt, und der Schlauch ist ebenfalls bis zum Deckel über den Einlass 2 bzw. den Auslass 10 geschoben. Es ist zu erkennen, dass der Schlauch 18 durch die Rohrschelle zwischen der Rohrschelle und dem Einlass eingequetscht wird.

Sowohl in Figur 6 als auch in Figur 7 ist zu erkennen, dass Wasser, welches durch den Schlauch 18 geführt wird, in den Innenraum des Tonkörpers 1 gelangen kann.

Bei der Variante nach Figur 6 kann das Wasser den Innenraum durch Durchtritt durch die Wandung 17 den Tonkörper verlassen, bei der Ausführung gemäß der zweiten Variante 8 kann sowohl Wasser durch den Innenraum von einem Schlauchstück 19 zum Schlauchstück 20 fließen als auch durch die Wandung des Tonkörpers nach außen gelangen.

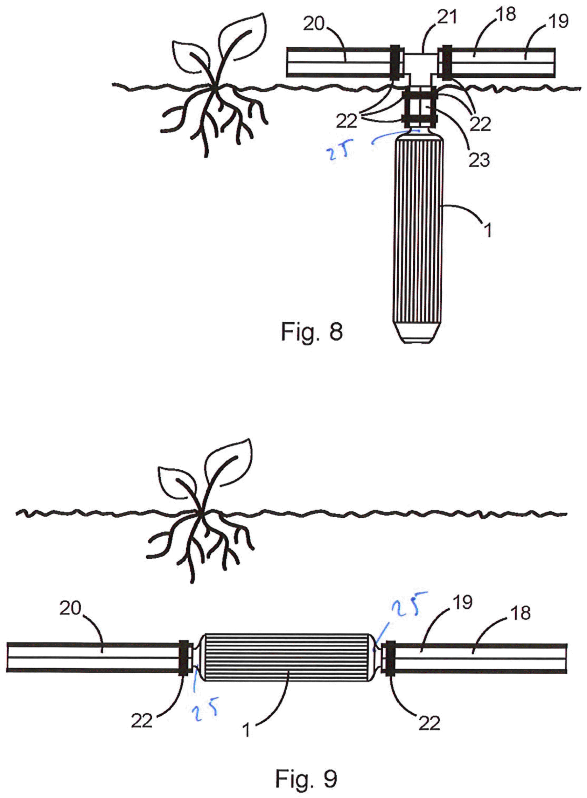

Figur 8 zeigt schematisch die Verlegung des Tonkörpers 1 nach Figur 1, Figur 9 zeigt die Verlegung des Tonkörpers gemäß der Variante nach Figur 2.

In Figur 8 ist zu erkennen, dass der Tonkörper 1 vertikal in den Boden eingebracht wird und in der gezeigten Variante der Schlauch 18 mit der Oberseite des T-Stücks oberhalb des Bodens somit sichtbar bleibt.

Das in den Körper gelangende Wasser kann durch die Wandung nach außen gelangen und somit den Boden in der Umgebung des Tonkörpers befeuchten bzw. bewässern.

Bei der Variante nach Figur 9 liegt der Tonkörper im Wesentlichen waagerecht in der Erde und dies gilt dann auch für die Schlauchabschnitte, die am Einlass bzw. Auslass des Tonkörpers angeschlossen sind, wobei ein Ende des Schlauchs dann aus dem Boden herausragt, um über ein übliches Schlauchanschlusssystem z. B. GARDENA^{®}-System, mit einer Wasserversorgung verbunden zu werden.

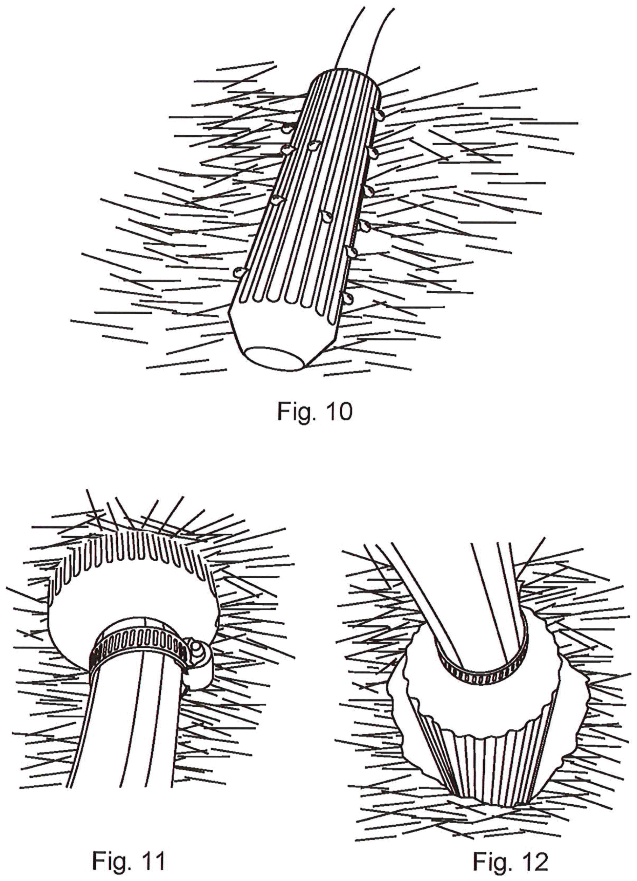

Figur 10 zeigt die Ablage eines Tonkörpers gemäß der Variante 1 oberhalb des Erdbodens; dort ist auch zu erkennen, dass Wasser bereits aus dem Inneren des Tonkörpers nach außen gelangt, am Tonkörper dann herunterfließt und dann die Oberfläche des Erdbodens benetzt. Die Verlegung des Tonkörpers gemäß Figur 2 ebenfalls auf der Erdoberfläche ist selbstverständlich auch möglich.

Figur 11 zeigt eine Variante mit einem Tonkörper, der von der Erde bedeckt wird, sodass insbesondere die Erde, die den Tonkörper berührt, gut befeuchtet und mit Wasser versorgt wird.

Figur 12 zeigt, wie der Tonkörper gemäß der Variante 1 vertikal in ein vorgefertigtes Loch in den Boden eingebracht wird.

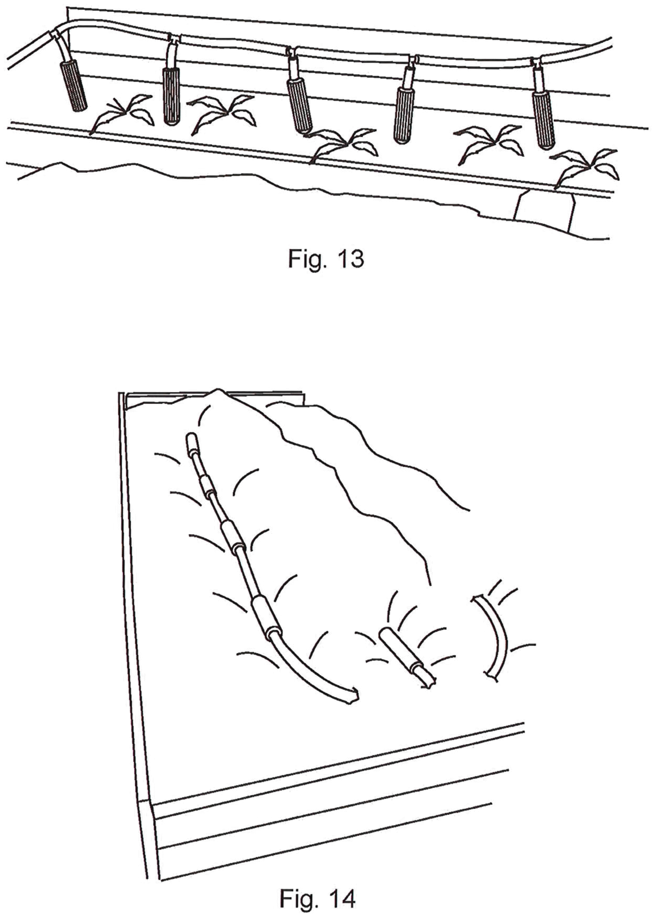

Figur 13 zeigt ein System von mehreren Tonkörpern gemäß der Variante 1, die an einem Schlauch angeschlossen sind, und im Bereich des Anschlusses sind die einzelnen Tonkörper jeweils über ein T-Stück und Schlauchabschnitte an den Schlauch angeschlossen.

Selbstverständlich ist es auch möglich, dass mehrere Tonkörper der Variante 2 hintereinander in ein Schlauchsystem integriert werden, also mit einem ersten Schlauchabschnitt, dann Tonkörper, nächster Schlauchabschnitt, dann weiterer Tonkörper, weiterer Schlauchabschnitt, weiterer Tonkörper etc. Wie viele solcher Tonkörper mit welcher Schlauchlänge verlegt werden, hängt vom jeweiligen Einsatzzweck ab.

Der Schlauchzuschnitt wie auch die Anzahl der Tonkörper, die Verbindung des Schlauchs mit den Tonkörpern etc. kann von einem Anwender in einfacher Art und Weise selbst hergestellt werden, vor allem dann, wenn die Rohrschellen an einen üblichen Eingriff für übliches Werkzeug, z. B. Kreuzschlitz, TORX, Inbus etc. aufweisen.

Somit kann erfindungsgemäß ein Systemset bereitgestellt werden, welches der Kunde an seine Bedürfnisse anpassen kann.

Die Tonkörper 1 können sowohl outdoor als auch indoor eingesetzt werden.

Die Schläuche weisen bevorzugt einen ½ Zoll oder ¾ Zoll Maß auf.

Bei dem System mit den Tonkörpern gemäß der Variante 2 ist darauf zu achten, dass beim letzten Schlauchanschluss ein Verschluss, z. B. Stopfen, Kappe aus Gummi oder dergleichen, vorgesehen ist, sodass nicht dann Wasser durch den Schlauch einfach in die Umwelt fließen kann. Bei dem erfindungsgemäßen System soll das Wasser bevorzugt immer nur durch die Tonkörper in das Erdreich gelangen. Der Stopfen zum Verschluss des Tonkörpers kann auch aus einem Tonmaterial bestehen. Dies hat den Vorteil, dass dann, wenn der Stopfen von außen feucht ist, einerseits an dieser Stelle Wasser auch nach außen abgegeben werden kann andererseits aber auch der feuchte Tonstopfen dann ein Anzeiger dafür ist, dass sich Wasser im System befindet, insofern hat also auch der Tonstopfen eine Sensorfunktion, die eine Kappe aus Gummi so nicht hätte.

Es ist auch möglich, dass Flüssigdünger oder die Zugabe weiterer Flüssigkeiten dem Wasser beigemengt/zugesetzt werden, auch diese Flüssigkeiten können ohne Weiteres bei Durchdringung der Wandung der Tonkörper nach außen gelangen.

Sowohl die Tonkörper als auch die gezeigten beschriebenen Bewässerungssysteme können ohne Elektrizität betrieben werden, es bedarf lediglich eines Wasseranschlusses mit einer Wasserversorgung, sei es aus einem Wasserhahn oder einer Regenwassertonne oder dergleichen.

Ein Vorteil der Verlegung von Tonkörpern unterhalb der Erde liegt auch darin, dass damit erreicht wird, dass auch in der kalten Jahreszeit die Tonkörper frostfrei bleiben und somit geschützt sind gegen Frostschäden.

Frostschäden lassen sich auch dann vermeiden, wenn in der kalten Jahreszeit die Tonkörper nicht mehr mit Wasser versorgt werden. Das System mit Tonkörpern nach Variante 1 bietet für die nachträgliche Installation auch für den unterjährigen Wechsel mehr Flexibilität und erlaubt es immer, dass der Benutzer ständig weiß, wo in etwa die Tonkörper im Boden angeordnet sind, dies besonders dann, wenn der Schlauch oberirdisch liegt. Das verhindert dann bei der Gartenarbeit Beschädigungen oder Zerstörungen der Tonkörper durch übliche Gartenwerkzeuge wie Harken, Schaufeln, Hacken.

Ein Verschluss des Auslasses beim Tonkörper der Variante 2 erlaubt es, diesen Tonkörper wie den Tonkörper nach Variante 1 einzusetzen. Der Verschluss kann dabei ein Deckel sein, aber auch eine Kappe aus flexiblem Gummi, Kunststoff oder dergleichen mit einem Gummiring oder auch wiederum einem Rohrschellenverschluss, sodass der Auslass dann verschlusssicher dicht ist.

Letztlich ist es auch möglich, dass der Schlauchanschluss zum Tonkörper mittels eines Klebers erfolgt, z. B. eines mittelelastischen Klebers. Dann sind keine Rohrschellen notwendig.

Bei Anschluss eines Systems von Tonkörpern der Variante 1 oder 2 mit einem Schlauch an den Hauswasseranschluss wird bevorzugt ein Druckminderer zwischen dem Hauswasseranschluss und dem Schlauchsystem vorgesehen, um somit den Tonkörpern nicht zu hohe Wasserdrücke zuzumuten.

Wie beschrieben, ist es möglich, bei der Bildung eines Systems mit einem Tonkörper der zweiten Variante (Figur 2) eine "Schlauch-Tonkörper-Kette" -siehe Figur 14- zu bilden, das heißt, an einem ersten Schlauchstück ist ein erster Tonkörper 1 angeschlossen und daran wiederrum ein Schlauchstück, dann wieder ein Tonkörper, dann wieder ein Schlauchstück usw., die Zahl der Tonkörper und auch die Länge der Schlauchabschnitte 18, 19, 20 wird immer durch den Anwender selbst festgelegt, dies hängt ganz wesentlich davon ab, welche Befeuchtungs-/Bewässerungssituation vor Ort benötigt wird. Der Tonkörper, der dann im System abschließt, kann ein Tonkörper der zweiten Variante sein bei dem dann der Auslass mittels eines Stopfens, einer Kappe etc. geschlossen wird oder der abschließende Tonkörper ist dann ein Tonkörper der ersten Variante, welcher nur einen Einlass aber ansonsten keinen Auslass aufweist.

In beiden Varianten ist dann sichergestellt, dass das Wasser, welches über die Schlauchleitung den Tonkörpern zugeführt wird, nur über die Tonkörper diese verlassen kann nicht aber über einen der Auslässe direkt ins Erdreich gelangen kann; dies würde ein erheblich erhöhten Wasserbedarf nach sich ziehen, welcher unerwünscht ist.

Erste Tests haben ergeben, dass mittels des erfindungsgemäßen Tonkörpers bzw. mittels der erfindungsgemäßen Systeme sich der Wasserverbrauch erheblich reduzieren lässt, bis zu 70% und dabei deutlich weniger Unkrautbildung wie auch Pflanzenkrankheiten wahrgenommen werden, sodass insgesamt sich auch ein deutlich höherer Ertrag der Pflanzen, z. B. Gemüse, Kräuter, einstellt.

Bei einer Wandstärke der Tonkörper von 8 mm oder größer hängt die Wasserabgabe durch die Wandung von innen nach außen weniger vom Wasserdruck selbst ab, sondern von den Umgebungsbedingungen um den Tonkörper selbst. Ist dieser außenseitig feucht, weil bereits die umgebende Erde feucht ist, gibt es einen geringeren natürlichen Osmose-Effekt (bzw. Saugspannungs-Effekt), während hingegen die Wasserabgabe größer ist, wenn in der direkten Umgebung des Tonkörpers die umliegende Erde trocken ist. Die Tonkörper "schwitzen" somit quasi das Wasser durch die Wandung bedarfsgerecht (ohne zu starke Verwässerung) aus und die entsprechende Wandstärke sorgt dafür, dass der Wasserdruck nicht die entscheidende Größe für die Wasserabgabe selbst ist, sondern, wie erwähnt, die unmittelbaren Außenbedingungen um den Tonkörper herum.

Bei den erfindungsgemäßen Systemen hat sich auch herausgestellt, dass zuverlässig sich nie Luft in den Systemen befindet, auch dann nicht, wenn die Tonkörper mit den angeschlossenen Schläuchen zunächst verlegt werden und dann das Wasser zugeführt wird.

Es ist auch möglich, dass im Bereich des Mittelteils ein dritter Anschluss vorgesehen ist, der dann wiederum die Abmaße eines Einlasses bzw. Auslasses aufweist und der Mittelteil selbst geschlossen ist, nur bei diesem dritten Anschluss ist es auch möglich, eine besondere Düngerbeigabe für ganz bestimmte Tonkörper im Bewässerungssystem zuzuführen, wenn bei diesem dritten Anschluss ein Schlauch mit dem entsprechenden Anschluss an ein Düngerreservoir vorgesehen ist.

Die Wasserversorgung für die Tonkörper bzw. die beschriebenen Bewässerungssysteme musst nicht zwingend mit sauberem, klarem Trinkwasser erfolgen, es geht auch sehr gut mit gesammeltem Regenwasser, z. B. aus der Regenwassertonne, aber auch mit Wasser, welches aufgrund von Schwebstoffen, z. B. Staub, Sand, Pflanzenmaterialien, eher naturtrüb ist.

Dabei haben dann die Tonkörper auch eine Filterfunktion, denn sie lassen nur das Wasser selbst, aber nicht die Schwebstoffe, durch. Da die Tonkörper innenseitig eine sehr große Oberfläche aufweisen, ist auch nicht zu erwarten, dass durch das Zusetzen der Poren diese Wasserdurchtrittsfunktion schnell verloren geht. Die in einem naturtrüben Wasser befindenden Stoffe werden sich im Inneren der Tonkörper absetzen, diese können aber durch einen einfachen Reinigungsvorgang, z. B. Spülvorgang, schnell ausgewaschen werden. Dies gilt auch für das Äußere der Tonkörper, die ständig im Kontakt mit der umliegenden Erde sind und wo sich dann ebenfalls Feststoffe außen am Tonkörper absetzen. Die Reinigung dieser Tonkörper außen kann auch mit einer Bürste, einem Schwamm oder auch mit einem Wasserstrahl bewerkstelligt werden, für die Reinigung der Tonkörper von der Innenseite ist besonders ein harter Wasserstrahl gut geeignet.

Vorzugsweise werden die Tonkörper in regelmäßigen Abständen, z. B. einmal im Jahr, außenseitig mit einer großen, groben Bürste gereinigt, ansonsten auch gewartet und auch innenseitig gereinigt, wobei bei der Spülung des Gesamtsystems (also Tonkörper und Schlauchsystem) auch wahlweise Essig- oder Zitronensäure oder auch Algenentferner eingesetzt wird, um somit die langfristige Funktion aller Elemente des Bewässerungssystems zu gewährleisten.

Die Tonkörper können außenseitig auch eine Aufnahme aufweisen, um beispielsweise einen kleinen Stab, eine kleine Stange oder dergleichen aufzunehmen, die beim Einbringen in die Aufnahme dann oberseitig am Erdboden sichtbar ist. Diese Lösung hat den Vorteil, dass dann der Benutzer des Systems ständig weiß, wo Tonkörper in der Erde liegen, um somit bei Gartenarbeiten Beschädigungen am Tonkörper zu vermeiden bzw. bei einer Neuverlegung die Tonkörper in der Erde schneller wiederzufinden. Vorzugsweise sind die Stäbe, Stangen oder dergleichen, die von der Aufnahme (diese Aufnahme kann ein kleiner Ring sein, der entweder Teil des Tonkörpers ist oder auch der Rohrschelle oder des Schlauches) oberseitig mit einer optischen Markierung abgeschlossen ist, z. B. mit einem Fähnchen oder dergleichen.

Wenn die Aufnahme Teil des Tonkörpers selbst ist, wird die Aufnahme auch bei der Herstellung schon vorgesehen. Vorzugsweise sind mehrere solcher Aufnahmen dann am Tonkörper vorgesehen um somit nach der Verlegung immer eine Aufnahmeposition zu haben, in die ein Stab, eine Stange oder dergleichen vertikal eingesteckt werden kann, damit sie auch von der Oberseite der Erde gut erkennbar ist.

Wie bereits beschrieben, sieht die Erfindung der vorliegenden Anmeldung mehrere Varianten zur Lösung der gestellten Aufgabe vor.

Eine weitere Variante zur Lösung dieser Aufgabe sei nachfolgend aufgezeigt:
Bei der zunächst in den Figuren dargestellten und beschriebenen Variante weist das Abschlussstück 25 ein oder zwei oder gar drei Abschnitte 5, 6, 7 auf, die von einem Schlauch aufgenommen werden und mit einem entsprechenden Werkzeug, z. B. einer Schelle dafür verbunden werden, sodass der Schlauch fest um bzw. an einem Abschnitt 5, 6 und damit fest um den Einlass 2 und damit fest um das an dem Abschlussstück 25 anliegt, wobei fest hier auch bedeutet, dass die Verbindung zwischen Schlauch 18, 19, 20 und dem jeweils betroffenen Abschnitt des Einlasses 2 des Abschlussstücks 25 wasserdicht ist.

Nachstehend wird nun eine Variante der Erfindung aufgezeigt, bei welcher das Abschlussstück 25 außenseitig über Standardabmaße verfügt, sodass es mit Standardwerkzeugen auch einfacher ist, ein Schlauch 18, 19, 20 mit üblichen Standardabmaßen an das Abschlussstück 25 des Tonkörpers 1 anzuschließen.

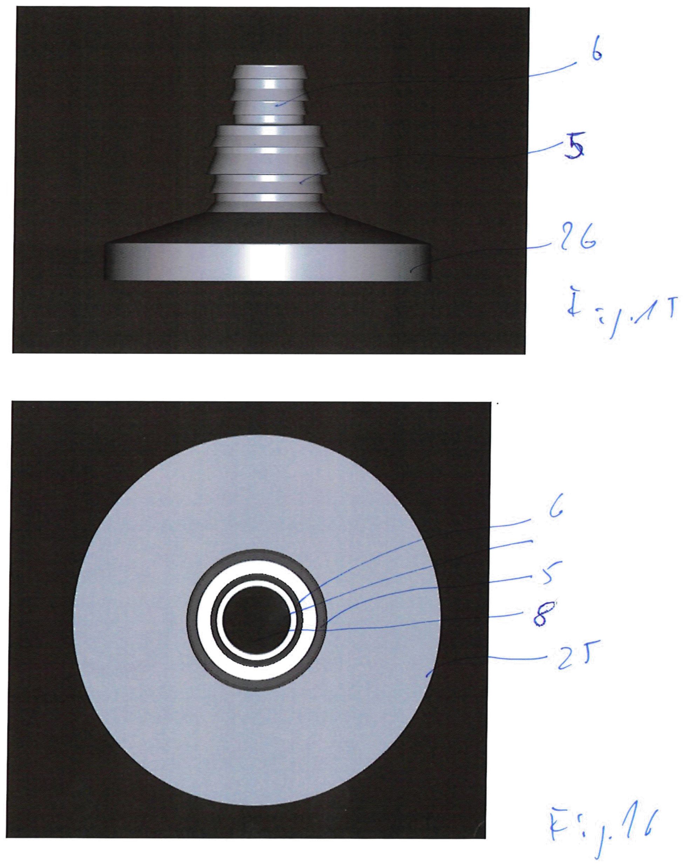

Figur 15 zeigt die Seitenansicht eines solchen Abschlussstücks 25 mit einem Kragen 26. Dieser Kragen 26 umschließt bei Anlage des Abschlussstücks 25 an dem Mittelteil 4 den äußeren Rand des Mittelteils 4 oder sitzt stumpf auf dem Außenrand des Mittelteils 4.

Das in Figur 15 gezeigte Abschlussstück 25 weist wiederum einen Abschnitt 5 auf sowie daran vom Kragen 26 weggerichtet den weiteren Abschnitt 6 auf. Der Abschnitt 5 weist einen größeren Durchmesser auf als der Abschnitt 6. Der Abschnitt 5 weist außenseitig Dichtlippen/Dichtrippen auf, die (mehr oder weniger) fest, aber auch nachgiebig, weich sein können. Auch der Abschnitt 6 weist solche Dichtlippen/Dichtrippen auf.

Der Abschnitt 5 weist dabei ein Standardabmaß auf, nämlich ein ¾ Zoll Schlauchanschluss und der Abschnitt 6 weist einen ½ Zoll Schlauchanschluss-Maß auf.

Statt der beiden Abschnitte 5, 6 ist es natürlich auch möglich, dass nur ein Abschnitt 5 oder 6 vom Abschlussstück 25 ausgebildet ist.

Die dargestellte Variante hat den Vorteil, dass ohne Schwierigkeiten zwei verschiedene Schläuche, nämlich Schläuche 18, 19, 20 mit dem Innenmaß ½ Zoll oder ¾ Zoll an das Abschlussstück 25 alternativ angeschlossen werden können. Es hat den Vorteil, dass dann, wenn der Benutzer des Tonkörpers 1 bzw. des Tonkörpersystems nur eine ganz bestimmte Schlauchvariante vorliegen hat, diese auch benutzen kann und nicht ein Schlauchsystem erwerben muss, welches er eventuell nicht vorrätig hat.

Wenn der Schlauch 18, 19, 20 mit seinem Endstück auf den entsprechenden Abschnitt 5 oder 6 geschoben wird, wird aufgrund der vorhandenen Dichtlippen bzw. Dichtrippen bereits eine gute Dichtigkeit gegeben sein, mittels einer Schelle kann dann diese Anbindung und Dichtigkeit des Schlauches zum entsprechenden Abschnitt 5 oder 6 des Abschlussstücks 25 verbessert werden.

Figur 16 zeigt die Draufsicht (von außen) auf das Abschlussstück 25 und dabei sind gut der Außendurchmesser des Abschnitts 5, der Außendurchmesser des Abschnitts 6 als auch der Einlasskanal 8 des Einlasses (oder Auslasses) des Abschlussstücks 25 zu erkennen.

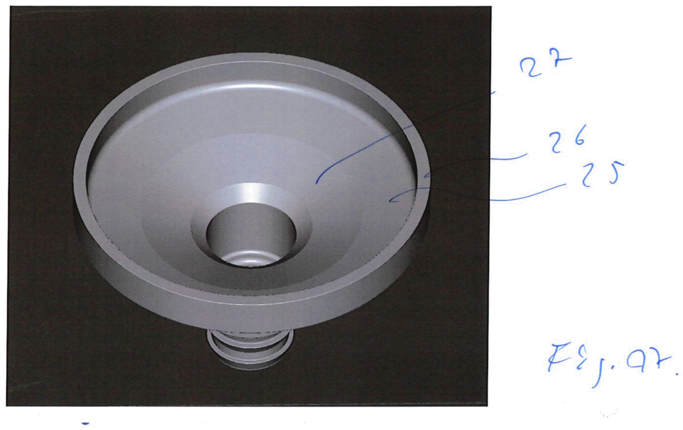

Figur 17 zeigt eine perspektivische Innenansicht zum vorgezeigten Abschlussstück 25. Dabei ist gut zu erkennen, dass der Kragen 26 des Abschlussstücks 25 eine bestimmte Höhe aufweist, z. B. 5 mm bis 10 mm. Die Innenseite 27 des Abschlussstücks 25 ist dabei so ausgebildet, dass sie entsprechend der Außenseite des Mittelteils angepasst ist.

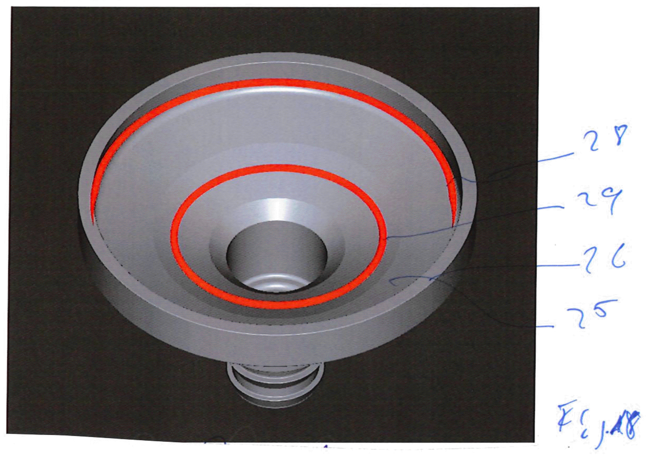

Figur 18 zeigt die zuvor gezeigte Darstellung, allerdings mit einer aufgetragenen Bahn (Raupe) 28 eines Klebematerials und/oder einer aufgetragenen Bahn 29 des Dichtungsmaterials. Es können beide Bahnen 28 und 29 aufgetragen werden, aber es ist auch möglich, dass nur eine Bahn aufgetragen wird, die sowohl eine Klebe- als auch eine Dichtungsfunktion aufweist.

Als Klebematerial eignet sich dabei insbesondere ein Acrylatkleber, z. B. vom Typ 3M Scotch-Weld DP8005 oder 3M Scotch-Weld DP8010, deren Datenblätter sind bekannt:
- 3M Scotch-Weld DP8005: https://www.3mdeutschland.de/3M/de_DE/p/d/b40066451/ Technisches Datenblatt: https://multimedia.3m.com/mws/media/826521O/datasheets-klebstoffe-2k-epx.pdf?&fn=DP8005_R4.pdf
- 3M Scotch-Weld DP8010: https://www.3mdeutschland.de/3M/de DE/p/d/b40066429/ Technisches Datenblatt: https://multimedia.3m.com/mws/media/826528O/datasheets-klebstoffe-2k-epx.pdf?&fn=DP8010 R4.pdf

Das vorgeschriebene Material weist sehr gute Eigenschaften zum Verkleben des Abschlussstücks an dem Mittelteil des Tonkörpers auf, gleichzeitig wird auch eine hinreichend gute Dichtigkeit hergestellt.

Wie erwähnt können mehrere Bahnen 28 oder 29 aufgetragen werden, es ist auch eine flächige Verteilung an der Innenseite des Abschlussstücks denkbar, aber auch mit einer guten Verteilung nur einer Bahn kann das Abschlussstück hinreichend gut mit dem Mittelteil verklebt und dabei abgedichtet werden.

Das gezeigte Abschlussstück kann aus Kunststoff, PP, PE, Thermoplast, Recyclat oder auch aus Metall hergestellt werden, aber auch wiederum aus Ton selbst.

Für die Herstellung aus Ton wird dazu entsprechend Ton extrudiert, gepresst und dann gebrannt, oder nur gepresst und dann gebrannt. Nach dem Extrudieren bzw. Pressen kann auch noch ein Formschritt erfolgen um dem Abschlussstück die gewünschte Form zu geben.

Die gleiche Herstellart gilt auch für den Mittelteil des Tonkörpers. Es kann beispielsweise für das Mittelteil zunächst Ton extrudiert werden und dann in eine vorbestimmte Form gepresst werden und dann gebrannt werden.

Es ist aber auch möglich, den Ton für das Mittelteil gleich zu pressen und dann in einen Brennvorgang zu geben, oder aus dem Ton ein Rohr zu extrudieren und dann zu brennen, um dann letztlich das Abschlussstück und Mittelteil mittels Kleben, Schrauben, Klemmen (Bajonettverschluss) oder dergleichen dichtend miteinander zu verbinden.

Sobald das Abschlussstück aus Kunststoff gefertigt ist, besteht dies vorzugsweise aus PE oder PP oder einem Recyclat. Vorteil dieser Materialen ist, dass sie keinem Brennschritt mehr unterliegen müssen, also von vornherein eine bestimmte und gleichbleibende Außen-/Innen-Geometrie aufweisen und somit immer auch auf die entsprechenden Schläuche bzw. Anschlüsse, z. B. GARDENA^{®}-Anschluss, Klick-Anschluss oder dergleichen, sicher passen.

Ein Verklemmen des Abschlussstücks an dem Mittelteil ist auch möglich, ähnlich wie ein Bajonettverschluss, in dem im PE ein Dichtband anstelle einer Klebefuge eingesetzt wird und eine Außenbuchtung aus Keramik in eine Einbuchtung im PE-Teil leicht geneigt verläuft (wie üblich bei Bajonettverschlüssen).

Grundsätzlich ist auch ein Schraubanschluss des Abschlussstücks an dem Mittelteil denkbar, wenn beispielsweise der Außenrand des Mittelteils ein Innengewinde und der Innenteil des Abschlussstücks ein Außengewinde aufweist.

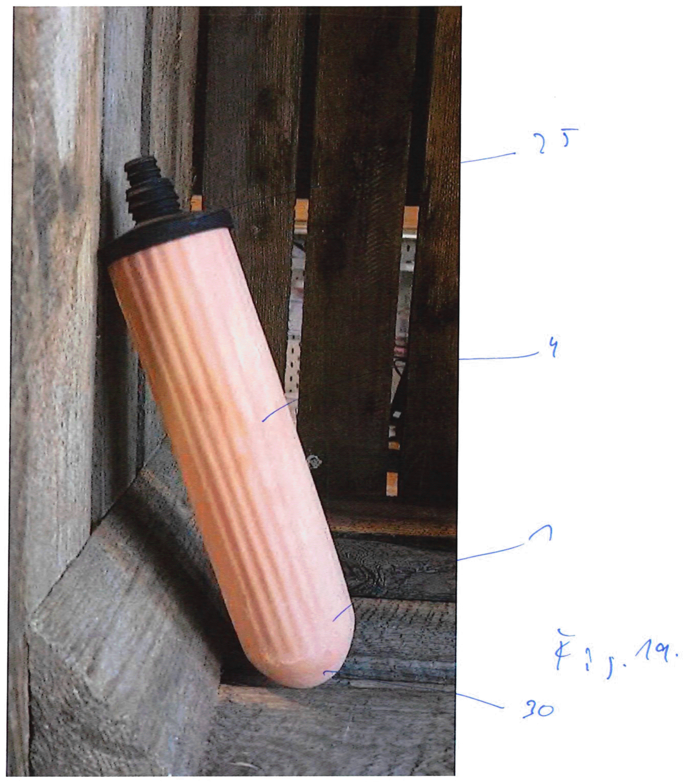

Figur 19 zeigt die Abbildung eines erfindungsgemäßen Tonkörpers 1 mit einem angesetzten Abschlussstück 25 an dem Mittelteil 4 des Tonkörpers 1. Die dem Abschlussstück abgewandte Seite 30 des Tonkörpers ist fest verschlossen, z. B. durch das Aufsetzen einer Tonkappe oder mit dem Ausbilden eines Verschlusses auf der Seite im Herstellprozess, z. B. durch Verpressen des Tons an der Seite.

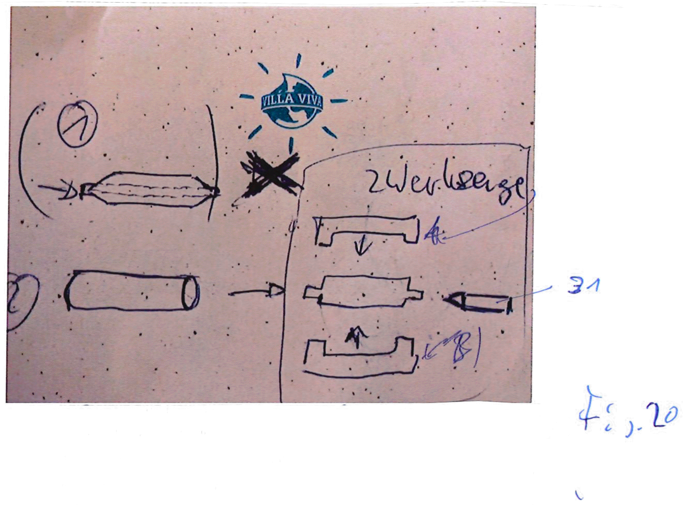

Figur 20 soll die Herstellweise noch einmal verdeutlichen.

Zunächst einmal wird der pastöse Ton als Rohr mit ausreichender Wandstärke extrudiert. In einem zweiten Prozessschritt werden die Abschlüsse an den beiden Enden bzw. an einem Ende ein Abschluss (mit Einlass) und am anderen Ende eine Endkappe mechanisch umgeformt. Mit einem zweiteiligen Werkzeug wird dann das noch immer pastöse Material in Form umgeformt damit das ursprüngliche zylindrische Rohr als Abschluss oder Endkappe (verschlossen) dient. Damit der Hohlraum nicht versiegelt wird, fährt zur Herstellung des Abschlusses immer ein Dorn von einer Seite (oder von beiden Seiten, wenn beide Seiten offenbleiben sollen) vor dem Pressvorgang ein, nach dem Pressen wird dieser Dorn wieder entfernt und das fertige Teil wird entformt, sodass ein Einlass 2 bzw. Kanal 14 für das ein- oder ausfließende Wasser verbleibt. Auf diese Form lässt sich dann das Abschlussstück aufsetzen oder die Außenseite der Ein- bzw. Auslässe wird, wie anhand der Figuren 1 bis 13 beschrieben, als Abschlussstück 25 ausgeformt.

Statt einer Extrusion und einem Pressvorgang kann aber auch pastöser Ton direkt in einer Negativ-Form von zwei Seiten in Form gepresst werden, z. B. durch die zwei Werkzeuge A und B der Figur 20. Für die Ausbildung des Einlasses wird dabei wiederum ein Dorn 31 zum Erhalt des Öffnungskanals 14 eingesetzt. Dieses Verfahren eignet sich insbesondere für Varianten des Produkts, bei denen die gesamte Wandung, insbesondere auch die Wandung des Einlasskanals, dünner ist, also wie zuvor beschrieben und in denen ein kleineres Innenvolumen und ein kleinerer Außendurchmesser gewünscht sind.

Das zuvor beschriebene Verfahren lässt sich auch umsetzen, indem Tongranulat mit geringerer Feuchte eingesetzt wird und zum Tonkörper mit Mittelteil verpresst wird.

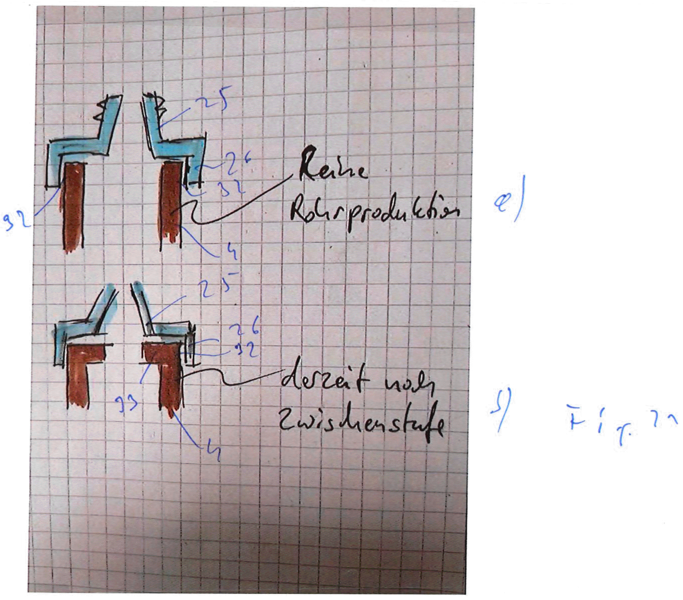

Figur 21 zeigt einen Querschnitt durch zwei alternative Ausbildungen des Tonkörpers im Bereich des Endabschnitts des Mittelteils bzw. des angesetzten Abschlussstücks.

In der Variante von Figur 21a ist das Mittelteil im Querschnitt zylindrisch (oder quadratisch) ausgebildet und das Abschlussstück wird hier aufgesetzt. Hierbei ist dann gut zu erkennen, dass der Kragen 26 außen am Endabschnitt 32 des Mittelteils 4 anliegt und auch dort hinreichend Platz für den Auftrag des Klebematerials oder Dichtungsmaterials vorhanden ist.

Figur 21b zeigt eine Variante von Figur 21a, die sich dadurch unterscheidet, dass am Endabschnitt 32 des Mittelteils 4 noch einmal eine nach Innen ausgebildete Auskragung 33 aufweist. Dadurch ist mehr Fläche vorhanden zum Auftrag von Klebematerial bzw. Dichtungsmaterial zwischen Abschlussstück 25 und dem Endabschnitt 32 des Mittelteils 4.

Eine weiter Variante ist nicht gezeigt, sei aber hier erwähnt. Der Endabschnitt 32 des Mittelteils 4 kann auch so ausgebildet werden, dass er sich bis auf den letzten Abschnitt des Kanals 14 des Abschlussstücks 25 immer entsprechend der Innenkontur des Abschlussstücks 25 anpasst.

Die Varianten nach Figur 21a und b haben alle den Vorteil, dass damit der Randbereich des Endabschnitts 32 des Mittelteils 4, welches aus Ton besteht, vor dem Anstoßen und damit Wegplatzen geschützt wird. Solche Randbereiche von Tonkörpern sind immer sehr spröde und empfindlich gegen das Absprengen von Material und das Abschlussstück 25, insbesondere mit seinem überragenden Kragen 26, schützt dabei einerseits diesen empfindlichen, spröden Teil des Mittelteils 4 und sorgt gleichzeitig für die Ausbildung einer hinreichend großen Fläche für den Auftrag von Klebematerial und/oder Dichtungsmaterial.

Auch der nach Innen liegende Kragen des Mittelteils kann durch ein Pressen oder einen sonstigen Formschritt hergestellt werden.

## Patentansprüche

1. Tonkörper (1) zur Bodenbewässerung und/oder Bodenbefeuchtung aus einer aus gebranntem Ton bestehenden Hülle, welche ein Mittelteil (4) mit einer geschlossenen Außenwandung (5) des Tonkörpers bildet und einem inneren Hohlraum (9) zur Aufnahme von Wasser aufweist, wobei das Mittelteil (4) an wenigstens einem Ende ein Abschlussstück (25) mit einem Einlass (2) aufweist, wobei das Abschlussstück aus Ton, Kunststoff oder Metall besteht und das Abschlussstück wasserdicht mit dem Mittelteil (4) des Tonkörpers verbunden ist und das Abschlussstück wenigstens einen Abschnitt (5) mit einem Schlauchanschluss mit Standardabmaßen oder Standardausführungen aufweist, um einen Schlauch oder eine Leitung (18, 19, 20), welche an den Tonkörper angeschlossen werden soll, sicher und abdichtend an den Abschnitt des Abschlussstücks zu befestigen.

2. Tonkörper (1) zur Bodenbewässerung und/oder Bodenbefeuchtung aus einer aus gebranntem Ton bestehenden Hülle, welche ein Mittelteil (4) mit einer geschlossenen Außenwand (15) und einem inneren Hohlraum (9) zur Aufnahme von Wasser aufweist, wobei das Mittelteil (4) an einem Ende ein Abschlussstück (25) mit einem Einlass (2) aufweist, wobei der Einlass (2) aus zwei Abschnitten (5, 6) besteht, nämlich einem ersten Abschnitt (5), der unmittelbar an dem Mittelteil (4) angebracht ist und einem zweiten Abschnitt (6), wobei der erste Abschnitt (5) zwischen dem Mittelteil (4) und dem zweiten Abschnitt (6) liegt und der Außendurchmesser des ersten Abschnitts (5) geringer ist, als der Außendurchmesser des zweiten Abschnitts (6), wobei der erste Abschnitt (5) eine Länge aufweist, die der Länge eines einstellbaren Einlassverschlussmittels (22) angepasst ist, um eine Leitung (18, 19, 20), welche über beide Abschnitte (5, 6) des Einlasses (2) gelegt wird, sicher und abdichtend mit dem Einlassverschlussmittel (22) am ersten und/oder zweiten Abschnitt zu befestigen.

3. Tonkörper nach einem der vorhergehenden Ansprüche, **dadurch gekennzeichnet, dass** der Außendurchmesser des zweiten Abschnitts (6) ein lichtes Maß größer ist als der Innendurchmesser der Leitung (18, 19, 20), welche bevorzugt ein Schlauch aus flexiblem Material ist.

4. Tonkörper nach einem der vorhergehenden Ansprüche, **dadurch gekennzeichnet, dass** das Mittelteil (4) des Tonkörpers im Schlickergussverfahren oder Extrusionsverfahren hergestellt wird.

5. Tonkörper nach einem der vorhergehenden Ansprüche, **dadurch gekennzeichnet, dass** der Einlass (2) und das Mittelteil (4) zusammen hergestellt werden oder das Mittelteil (4) und das Abschlussstück (25) mit dem Einlass (2) getrennt hergestellt und nach Herstellung miteinander verbunden werden, z. B. durch Pressen oder Verkleben oder dergleichen.

6. Tonkörper nach einem der vorhergehenden Ansprüche, **dadurch gekennzeichnet, dass** der Tonkörper (1) ein zweites Ende aufweist, welches mit einem Verschluss (3) oder einem Auslass (10) versehen ist, wobei der Auslass (10) die Struktur und Abmaße des Einlasses (2) aufweist und/oder vorzugsweise das Mittelteil (4) des Tonkörpers im Wesentlichen zylindrisch oder quadratisch ausgebildet ist und außenseitig eine Struktur (16) zur Vergrößerung der Außenfläche aufweist.

7. Tonkörper nach einem der vorhergehenden Ansprüche, **dadurch gekennzeichnet, dass** das Einlassverschlussmittel (22) eine Schelle, insbesondere eine Schlauchschelle oder Rohrschelle oder dergleichen, ist und die Schelle eine Breite aufweist, die der Länge (L₁) des ersten Abschnitts (5) in etwa oder genau exakt entspricht.

8. Tonkörper nach einem der vorhergehenden Ansprüche, **dadurch gekennzeichnet, dass** der Einlass (2) des Tonkörpers einen dritten Abschnitt (7) aufweist, der sich an den zweiten Abschnitt (6) vom Mittelteil (4) weggerichtet anschließt, wobei der dritte Abschnitt (7) einen Außendurchmesser aufweist, welcher geringer ist, als der Außendurchmesser des ersten und zweiten Abschnitts und/oder der erste Abschnitt (5) im Wesentlichen hohl zylindrisch ausgebildet ist und der zweite Abschnitt (6) im Bereich des Übergangs zum ersten Abschnitt den gleichen Außenumfang, wie der erste Abschnitt (5), aufweist, der Durchmesser des zweiten Abschnitts (6) sich in Längsrichtung vom Mittelteil (4) wegerstreckend ballonartig oder ballig ausgebildet und vergrößert ist und sich in Richtung des dritten Abschnitts (7) verringert, und im Bereich des Übergangs zum dritten Abschnitt dessen Außendurchmesser annimmt.

9. Tonkörper nach einem der vorhergehenden Ansprüche, **dadurch gekennzeichnet, dass** der Einlass so ausgelegt ist, Leitungen bzw. Schläuche mit standardisierten Abmaßen, z. B. ½ Zoll und/oder ¾ Zoll Innenmaß aufzunehmen und/oder dass die Wandstärke des Mittelteils (4) im Bereich von 5 mm bis 12 mm, vorzugsweise bei 8 mm bis 9 mm liegt.

10. System einer Anzahl von Tonkörpern zur Bodenbewässerung und/oder Bodenbefeuchtung, wobei an einer Versorgungsleitung eine Mehrzahl von Tonkörpern (1) angeschlossen sind, wobei im Bereich des Anschlusses des Tonkörpers (1) an die Leitung (18, 19, 20), die Leitung ein T-Stück (21) aufweist, um Wasser einerseits durch die Leitung (18, 19, 20) und andererseits zu dem angeschlossenen Tonkörper (1) zu führen, wobei zwischen dem T-Stück und dem angeschlossenen Tonkörper ein Leitungsstück (23) mit einer gewählten Länge ausgebildet ist und das Leitungsstück (23) an den Tonkörper (1) mittels der Einlassverschlussmittel (22) befestigt ist und/oder dass die Länge des Leitungsstücks (23) zwischen dem T-Stück (21) und dem Tonkörper (1) so ausgebildet ist, dass der Tonkörper (1) in gewünschter Erdtiefe liegt, vorzugsweise in Längsrichtung vertikal in der Erde liegt und andererseits die Versorgungsleitung (18, 19, 20) oberirdisch noch sichtbar ist.

11. System einer Vielzahl von Tonkörpern zur Bodenbewässerung und/oder Bodenbefeuchtung, wobei an der Versorgungsleitung (18, 19, 20) eine Mehrzahl von Tonkörpern (1) angeschlossen sind, die jeweils einen Einlass (2) wie auch einen Auslass (10) aufweisen, wobei die Versorgungsleitung (18, 19, 20) an den Ein- bzw. Auslässen der Tonkörper (1) mittels Verschlussmittel (22) abdichtend befestigt ist, wobei der Tonkörper (1), der den Abschluss des Systems bildet einen Auslass aufweist, der mit einem Stopfen, einer Kappe oder dergleichen verschlossen ist.

12. System einer Vielzahl von Tonkörpern zur Bodenbewässerung und/oder Bodenbefeuchtung, wobei an der Versorgungsleitung (18, 19, 20) eine Mehrzahl von Tonkörpern (1) angeschlossen sind, die jeweils einen Einlass (2) wie auch einen Auslass (10) aufweisen, wobei die Versorgungsleitung (18, 19, 20) an den Ein- bzw. Auslässen der Tonkörper (1) mittels Verschlussmittel (22) abdichtend befestigt ist und wobei der Tonkörper, der den Abschluss des Systems bildet, einen Einlass aufweist aber keinen Auslass.

13. Tonkörper nach einem der vorhergehenden Ansprüche, wobei das Abschlussstück (25) mit der Hülle (4) aus Ton wasserdicht verklebt oder mittels eines Bajonettverschlusses oder dergleichen fest verbunden ist und/oder **dadurch gekennzeichnet, dass** das Abschlussstück (25), welches den Einlass (2) aufweist, an die aus Ton gebrannte bestehende Hülle (4) angesetzt und befestigt wird und einen der nachstehenden Standardabmaße aufweist:
A) ¾ Zoll Schlauchanschluss
B) ½ Zoll Schlauchanschluss
C) ¾ Zoll Gewinde (außen/innen)
D) Schnellsteckverbinderanschluss
E) Standard-Klickanschluss (GARDENA^{®}-System) oder ein vergleichbares, standardisiertes Schnellkupplungssystem für Schlauverbindungen (Steckkupplungssystem)
und/oder dass das Abschlussstück (25), welches den Einlass (2) des Tonkörpers (1) aufweist, aus einem Kunststoff nämlich einem PE (Polyethylen) oder PP (Polypropylen) oder Recyclat oder dergleichen hergestellt ist.

14. Tonkörper nach einem der vorhergehenden Ansprüche, **dadurch gekennzeichnet, dass** das Abschlussstück (25), welches den Einlass (2) aufweist, einen überstehenden Rand/Kragen (26) aufweist, in welchem das Mittelteil (4) aufgenommen werden kann, sodass der Kragen (26) die Hülle des Mittelteils (4) umfasst und das Abschlussstück (25) mit dem Mittelteil (4), also der Hülle, verklebt wird, vorzugsweise durch einen ersten und/oder zweiten Kleber, welcher auch eine Dichtfunktion aufweist und nicht wasserlöslich ist und/oder das Klebematerial auf die Innenseite des Abschlussstücks (25) flächig aufgetragen wird oder in ein, zwei oder mehr Bahnen/Raupen aufgetragen wird.

15. Tonkörper nach Anspruch 1, **dadurch gekennzeichnet, dass** das Abschlussstück (25) wenigstens zwei Abschnitte (5, 6) aufweist, nämlich einen ersten Abschnitt (5), der näher an dem Mittelteil (4) liegt, als der zweite Abschnitt (6), sodass der erste Abschnitt (5) zwischen dem Mittelteil (4) und dem zweiten Abschnitt (6) liegt, und der Außendurchmesser des ersten Abschnitts (5) größer oder kleiner ist, als der Außendurchmesser des zweiten Abschnitts (6), und beide Abschnitte (5, 6) Standardabmaße bzw. eine Standardausführung aufweisen, um Rohre, Schläuche, Leitungen (18, 19, 20) verschiedener Durchmesser, die an den Tonkörper angeschlossen werden sollen, sicher und abdichtend mit dem Abschlussstück am ersten und/oder zweiten Abschnitt zu befestigen und/oder vorzugsweise das Abschlussstück (25) einen zylindrischen Abschnitt aufweist, dessen Innendurchmesser ein lichtes Maß größer ist, als der Außendurchmesser des (zylindrischen) Mittelteils (4) und/oder vorzugsweise das Mittelteil (4) an seinem freien Ende so abgeschlossen wird, dass es eine nach innen liegende Auskragung (33) aufweist, die außenseitig an die Innenseite des Abschlussstücks (25) angepasst ist, sodass das Abschlussstück (25) und Mittelteil (4) sich über einen größeren Flächenabschnitt berühren und eine Auftragsfläche für Kleber bzw. Dichtmaterial bereitstellen.
